# EUROPÄISCHE PATENTSCHRIFT

(11) **EP 2 345 138 B1**
(45) Veröffentlichungstag und Bekanntmachung des Hinweises auf die Patenterteilung: **19.09.2012**
(21) Anmeldenummer: 09778854.1
(22) Anmeldetag: 07.10.2009
(51) Int. Cl.: H02K 21/46

(54) **ROTOR EINES SELBSTANLAUFENDEN ELEKTROMOTORS**
ROTOR OF A SELF-STARTING ELECTRIC MOTOR
ROTOR D UN MOTEUR ÉLECTRIQUE À DÉMARRAGE AUTOMATIQUE

(30) Priorität: 22.10.2008 DE 102008052646; 18.09.2009 DE 102009042214
(43) Veröffentlichungstag der Anmeldung: 20.07.2011
(73) Patentinhaber: KSB Aktiengesellschaft, 67227 Frankenthal (DE)
(72) Erfinder: URSCHEL, Sven, 67304 Eisenberg (DE)
(86) Internationale Anmeldenummer: PCT/EP2009/007178
(87) Internationale Veröffentlichungsnummer: WO 2010/046031

(56) Entgegenhaltungen:
- DE-A1-102005 050 643
- GB-A- 2 271 672
- JP-A- 11 289 700
- US-A1- 2002 084 710

## Beschreibung

Die Erfindung betrifft einen Rotor eines Elektromotors, insbesondere eines permanent erregten Synchronmotors, mit einer Rotorwelle, einem ein oder mehrere Permanentmagnete aufweisenden massiven Rotoraktivteil und mit einem Mittel zum Selbstanlauf des Elektromotors an einem Wechselspannungsnetz, so wie aus der DE 10 2005 050 643 A1 bekannt. Die Erfindung betrifft weiterhin ein Verfahren zum Betrieb eines mit einem solchen Rotor ausgestatteten Elektromotors.

Permanent erregte Synchronmotoren haben sich in vielen Anwendungsbereichen etabliert. Für solche Elektromotoren ist es erforderlich, dass sie an einem starren Wechselspannungsnetz, d. h. an einem ein- oder mehrphasigen Wechselspannungsnetz auf eine synchrone Nenndrehzahl hochlaufen. Bei kleineren Antrieben wird hierfür aus Kostengründen kein Drehzahlregelgerät, wie beispielsweise ein Frequenzumrichter verwendet, sondern die Rotoren sind mit einem Mittel zum Selbstanlauf des Elektromotors ausgestattet. Dieses Mittel zum Selbstanlauf besteht üblicherweise aus einem mit einzelnen Kupferstäben versehenen Kurzschlusskäfig, der mit den Magnetfeldlinien eines den Rotor umgebenden Stators in Wechselwirkung tritt und einen Anlauf des Elektromotors auf eine synchrone Drehzahl bewerkstelligt.

Durch die DE 10 2005 050 643 A1 ist ein derartiger Rotor eines selbstanlaufenden permanent erregten Synchronmotors bekannt. Der Rotor weist eine Rotorwelle und einen koaxial zur Rotorachse angeordneten leitfähigen Käfig auf. Das Rotoraktivteil besteht aus magnetisch gut leitfähigem Material. Dieses wird in einer ersten beschriebenen Variante von einem hohlzylinderförmigen Permanentmagneten umgeben oder in dieses sind in einer zweiten beschriebenen Variante innen liegende Blockmagnete eingebracht. Der Käfig ist als ein massiver Hohlzylinder aus elektrisch leitfähigem Material ausgebildet und dient zum Anlaufen des Elektromotors auf eine synchrone Drehzahl. Die Permanentmagnete entfalten beim synchronen Betrieb ihre Wirkung. Bei der Fertigung eines solchen Rotors wird zunächst das Ferritmaterial auf die Rotorwelle aufgebracht oder ein hohlzylinderförmig hergestellter Rotor wird über die Rotorwelle geschoben. Anschließend wird der Permanentmagnet über das Ferritmaterial geschoben und schließlich der Kurzschlusskäfig über den Permanentmagneten geschoben. Bei einer Variante mit Blockmagneten werden diese in das magnetisch gut leitfähige Material eingebracht und der so hergestellte Hohlzylinder aus Ferritmaterial und Permanentmagneten wird mit seiner inneren Aushöhlung auf die Rotorwelle geschoben und anschließend der massive Kurzschlussring über das ferromagnetische Material geschoben. In jedem Fall besteht die Fertigung eines solchen Rotors aus mehreren zeitaufwändigen Einzelschritten und bedingt die Einhaltung genauer Toleranzvorgaben der verwendeten Rotorteile.

Durch die nicht vorveröffentlichte PCT/EP2008/004213 der Anmelderin ist ein permanent erregter Rotor für Arbeitsmaschinen für einen Betrieb in einer chemisch aggressiven Umgebung bekannt. Das Rotoraktivteil und eine damit verbundene Welle ist aus ferritisch-austenitischem Duplexstahl hergestellt und in den Außenumfang eines solchen Rotoraktivteils integrierte Permanentmagnete sind vor chemischen Angriffen geschützt. Dabei sind die Permanentmagnete unterhalb der Rotoroberfläche angeordnet und beispielsweise durch eine dünnwandige Hülse aus Duplexstahl geschützt. Alternativ werden die Permanentmagnete dicht unterhalb der äußeren Oberfläche beziehungsweise der zylindrischen Außenumfangsfläche innerhalb des Rotoraktivkörpers angeordnet, um einen Schutz gegen Korrosionsangriffe auf die gefährdeten Permanentmagnete zu erhalten. Ein solcher für den Einsatz in hochkorrosiven Medien vorgesehener Rotor bietet zwar Vorteile beim Einsatz in einem chemisch aggressiven Umfeld. Die Verwendung eines solchen Rotors für einen selbstanlaufenden Elektromotor ist jedoch nicht möglich.

Der Erfindung liegt somit das Problem zu Grunde einen Rotor für einen selbstanlaufenden Elektromotor zu schaffen, dessen Herstellung wenig aufwändig ist und der gleichzeitig gute Anlaufeigenschaften sowie einen hohen Wirkungsgrad im Nennbetrieb gewährleistet.

Die Lösung des Problems sieht vor, dass das Rotoraktivteil und das Mittel zum Selbstanlauf einteilig und aus einem einzigen magnetisierbaren, korrosionsbeständigen und elektrisch leitfähigem Material bestehend ausgebildet ist, wobei in das Rotoraktivteil die Permanentmagnete integriert sind, und dass die Permanentmagnete von einem auf größerem Durchmesser angeordneten, ringförmigen und wirbelstromleitenden Bereich des Rotoraktivteils als Selbstanlaufmittel umgeben sind. Die Erfindung sieht vor, dass die Permanentmagnete in sich in axialer Richtung unterhalb der Außenumfangsfläche erstreckenden Taschen angeordnet sind. Solche Taschen nehmen die Permanentmagnete auf bzw. die Permanentmagnete können dadurch in den Rotor, den Rotoraktivkörper oder mehrere massiv ausgebildete Rotormodule eingesetzt werden. Durch die Ausbildung des Mittels zum Selbstanlauf als ein integraler Bestandteil des Rotoraktivteils ergibt sich gegenüber den bisherigen Lösungen, bei denen verschiedene Materialien benötigt werden, eine Bauteilstandardisierung, eine Materialminimierung und eine schnellere Fertigung. Und im Gegensatz zu einem Rotorkörper aus einem magnetisch hochpermeablen Material weist das aus einem einzigen magnetisierbaren, korrosionsbeständigen und elektrisch leitfähigen Material bestehende Rotoraktivteil eine wesentlich geringere Drehmomentwilligkeit auf, wodurch das Rotationsverhalten des Rotors verbessert wird. Die Permanentmagnete sind von einem auf größerem Durchmesser angeordneten ringförmigen und wirbelstromleitenden Bereich des Rotoraktivteils umgeben. Dieser ringförmige Bereich des Rotoraktivteils bildet somit das Mittel zum Selbstanlauf. Die Permanentmagnete sind dabei mit Abstand zur Rotoroberfläche angeordnet.

Dabei ist es von Vorteil, wenn die Wandstärke des ringförmigen Bereichs des Rotoraktivteils einem Wert entspricht, der zwischen 10% und 35% des halben Rotoraußendurchmessers liegt. Dadurch steht im äußeren Bereich des Rotoraktivteils ein ausreichend großes ringförmiges Mittel zum Selbstanlauf aus elektrisch leitfähigem Material zur Verfügung. Durch eine Wechselwirkung mit einem den Rotor umgebenden Stator bilden sich innerhalb des Außenbereichs des Rotors Wirbelströme aus, die zusammen mit den Magnetflusslinien des Stators eine Kraftwirkung auf den Rotor ausüben und so einen Selbstanlauf bewirken. Sobald der Rotor die synchrone Drehzahl erreicht hat, entfalten die Permanentmagnete ihre Wirkung.

Die Erfindung beruht auf der Erkenntnis, dass entgegen der vorherrschenden Meinung das Rotoraktivteil nicht aus einem hochpermeablen Material zu sein braucht, um gute Laufeigenschaften im Nennbetrieb eines Rotors zu erreichen. Vielmehr ist es entscheidend, dass in einem Rotor nur geringe magnetische Spannungsabfälle auftreten. Dies kann erreicht werden durch eine ausreichende Querschnittsfläche zur Flussführung und eine Anordnung der Permanentmagnete derart, dass der magnetische Fluss im Rotor nur kurze Wege zurücklegen muss. Versuche haben gezeigt, dass es bei einer entsprechenden Anordnung und/oder einer hohen Anzahl an Permanentmagneten ausreichend ist, das Rotoraktivteil aus einem Material herzustellen, das eine vergleichsweise geringe magnetische Permeabilität aufweist. Und dadurch ist es ermöglicht, das Rotoraktivteil und das Mittel zum Selbstanlauf einteilig und aus einem einzigen Material auszubilden.

Es hat sich als zweckmäßig erwiesen, dass das Material des Rotoraktivteils eine vergleichsweise geringe relative, magnetische Permeabilität, vorzugsweise eine relative, magnetische Permeabilität µᵣ von 5 bis 500 im Nennbetrieb besitzt.

Nach einer weiteren Ausgestaltung besteht das Rotoraktivteil aus einem korrosionsbeständigen Stahl. Eine solche Materialwahl ist für viele Anwendungen, in denen selbstanlaufende Elektromotoren zum Einsatz kommen, wie beispielsweise Gebäudetechnikanwendungen, vollkommen ausreichend. Erfindungsgemäß wurde erkannt, dass die Verwendung eines Edelstahls mit einer vergleichsweise geringen magnetischen Permeabilität für solche permanent erregten Rotoren praktisch keinen energetischen Effizienznachteil bedeutet. Zwar besitzen korrosionsbeständige Materialien in Form der elektrisch leitfähigen Stähle meist auch eine kleinere magnetische Permeabilität, welche den magnetischen Spannungsabfall in einem Rotorkörper erhöht. Dadurch sinken die permanent erregte Luftspaltinduktion und die so genannte Polradspannung und damit das Luftspaltdrehmoment nur leicht. Da aber mit abnehmender Luftspaltinduktion gleichzeitig auch die bisherigen Eisenverluste in einem den Rotor umgebenden Ständer eines Antriebsmotors und auch im Rotor selbst zurückgehen, ändert sich der Wirkungsgrad eines solchen Antriebsmotors bei geeigneter Auslegung der Material- und Wandstärken nur unwesentlich gegenüber den bisherigen Ausführungen mit magnetisch hochpermeablen, aber nicht korrosionsbeständigem Material.

Der Rotor kann als einteiliger Rotor mit angeformter Welle gestaltet sein. Hierfür hat sich die Verwendung eines gegossenen oder geschmiedeten Vorformling und dessen spanabhebende Bearbeitung als vorteilhaft erwiesen. Ebenso kann eine Welle oder können zwei Wellenteile in einem Rotoraktivteil befestigt sein.

Nach einer anderen Ausgestaltung besteht der Rotor aus mehreren Rotormodulen in Form von Rotoraktivteilen mit integralen Selbstanlaufmitteln. Dabei kann eine axiale Länge eines Rotormoduls durch die Abmessungen von darin anzuordnenden Permanentmagneten definiert sein. Die Rotormodule sind formschlüssig und/oder mittels einer Welle oder mittels Wellenteilen aneinander befestigt. Dadurch ist in einfacher Weise eine Anpassung an die jeweils benötigte Rotorbaulänge zur Erlangung der für den jeweiligen Anwendungsfall notwendigen permanentmagnetischen Energie möglich. Auch können damit lange Rotorbaulängen einfach realisiert werden. Jedes Rotormodul kann hierbei aus einem massiven Edelstahlblock bestehen.

In Abhängigkeit von Art und Aufbau der Taschen, in die die Permanentmagnete integriert sind, müssen nach einer Montage an einer oder beiden Rotorstirnseiten nur die Aufnahmeöffnungen der Taschen abgedichtet werden. Dazu sind die an mindestens einer Rotorstirnseite angeordneten Aufnahmeöffnungen der Magnettaschen durch separate Mittel verschlossen. Bei Verwendung von mehreren Rotormodulen wird die Abdichtung der Permanentmagnete an jedem Rotormodul vorgenommen. Die in die Taschen des Rotoraktivteiles angeordneten Permanentmagnete können schalenförmig, stabförmig, quaderförmig oder ähnlich ausgebildet sein. Sie können eine radiale oder eine diametrale Magnetisierung aufweisen. Ebenfalls ist es vorgesehen, dass in einer Tasche zwei oder mehrere Permanentmagnete axial hintereinander angeordnet sind.

Ebenso ist es möglich, einen Rotor mit ein oder mehreren Flusssperren zwischen den Permanentmagneten auszustatten. Einem für die Flusssperren bedingter geringfügig erhöhter Fertigungsaufwand steht der längerfristige Vorteil einer entsprechenden Reduzierung des Pol-Streuflusses gegenüber. Somit ist eine langfristige Energieeinsparung für einen damit ausgerüsteten Elektromotor gewährleistet.

Weitere Vorteile bringt es, wenn im Selbstanlaufmittel mehrere wirbelstrombeeinflussende Sperrräume angeordnet sind. Dadurch ist der Bereich des Rotoraktivteils, in dem sich für einen Selbstanlauf eines Elektromotors Wirbelströme ausbilden, in mehrere Abschnitte segmentiert. Dadurch bilden sich die Wirbelströme jeweils in den einzelnen Segmenten aus, was Effizienzverbesserungen beim Selbstanlauf mit sich bringt. Denn dadurch, dass die Ströme - wie bei einem herkömmlichen Käfigläufer ― definiert in Bahnen verlaufen, ergibt sich eine bessere Ausnutzung. Von Vorteil sind dabei stab- oder schlitzförmige Sperrräume. Solche Sperrräume oder Einstiche am Umfang des Rotors dürfen dabei auch im Bereich von Permanentmagneten liegen. Durch Variation der Art und/oder Anzahl solcher Sperrräume ist das Anlaufverhalten eines damit ausgestatteten Rotors optimierbar. Die Wirbelströme verlaufen innerhalb der dadurch entstehenden Segmente. Die Sperrräume müssen dabei nicht über die gesamte Länge des Rotors oder eines Rotormoduls ausgebildet sein, sondern können die stirnseitigen Randbereiche des Rotors aussparen.

Die Flusssperren und/oder die Sperrräume können offen oder geschlossen gestaltet sein. Vorteilhafterweise besitzen diese die Form von Einstichen, Schlitzen, Nuten, Bohrungen oder dergleichen.

Die Erfindung umfasst nicht nur den Rotor an sich, sondern schließt einen mit einem erfindungsgemäßen Rotor ausgestatteten Elektromotor mit ein.

Wegen der bereits genannten Möglichkeit des Selbstanlaufs, des Korrosionsschutzes und der Fertigungsvorteile ist ein erfindungsgemäßer Rotor mit Vorteil als Bestandteil eines selbstanlaufenden Spaltrohrmotors verwendbar.

Eine Kreiselpumpe mit einem Elektromotor sowie eine Kreiselpumpenanordnung bestehend aus mindestens einer Kreiselpumpe und mindestens einem Elektromotor gekennzeichnet durch mindestens einen erfindungsgemäßen Elektromotor und/oder Rotor liegt ebenfalls im Rahmen der Erfindung.

Aufgrund der Selbstanlaufeigenschaften des erfindungsgemäßen Rotors kann ein damit ausgestatteter Elektromotor und/oder eine Kreiselpumpe mit einem solchen Elektromotor durch ein ein- oder mehrphasiges, starres Spannungsnetz gespeist werden, also direkt an einem Spannungsnetz fester Frequenz betrieben werden.

Ein weiteres Verfahren sieht vor, dass die Speisung des Elektromotors durch einen Frequenzumrichter, vorzugsweise ohne Erfassung der Rotorlage, erfolgt. Durch den Frequenzumrichter ist der Elektromotor in seiner Drehzahl variabel regelbar. Durch die Erfindung ist dabei die Möglichkeit eröffnet, die Speisung des Elektromotors durch einen Frequenzumrichter üblicher, also nicht spezialisierter Bauart übernehmen zu lassen. Zur Ansteuerung kann auf eine Erfassung der Rotorposition verzichtet werden, was den Aufbau des Frequenzumrichters erheblich vereinfacht. Es können herkömmliche Umrichter mit U/f-Kennliniensteuerung verwendet werden. Durch das elektrisch leitfähige Mittel zum Selbstanlauf werden im Falle eines asynchronen Laufs, wie er bei einem Abriss des Rotors auftritt, in dieses Mittel wie in den Käfig eines Asynchronmotors Spannungen induziert, welche einen Stromfluss zur Folge haben. Zusammen mit den Magnetflusslinien des Stators erfolgt eine Kraftwirkung auf den Rotor, so dass der Rotor die durch den U/f-Umrichter veränderliche synchrone Drehzahl wieder annimmt.

Ausführungsbeispiele der Erfindung sind in den Zeichnungen dargestellt und werden im Folgenden näher beschrieben. Es zeigen die
- Figur 1: eine Kreiselpumpe mit einem erfindungsgemäßen Rotor im Querschnitt; die
- Figur 2: einen anderen erfindungsgemäßen Rotor im Querschnitt; die
- Figur 3: den gleichen Rotor im Längsschnitt; die
- Figur 4: einen weiteren Rotor mit mit Sperrräumen versehenem Selbstanlaufmittel und die
- Figur 5: den gleichen Rotor in dessen Draufsicht.

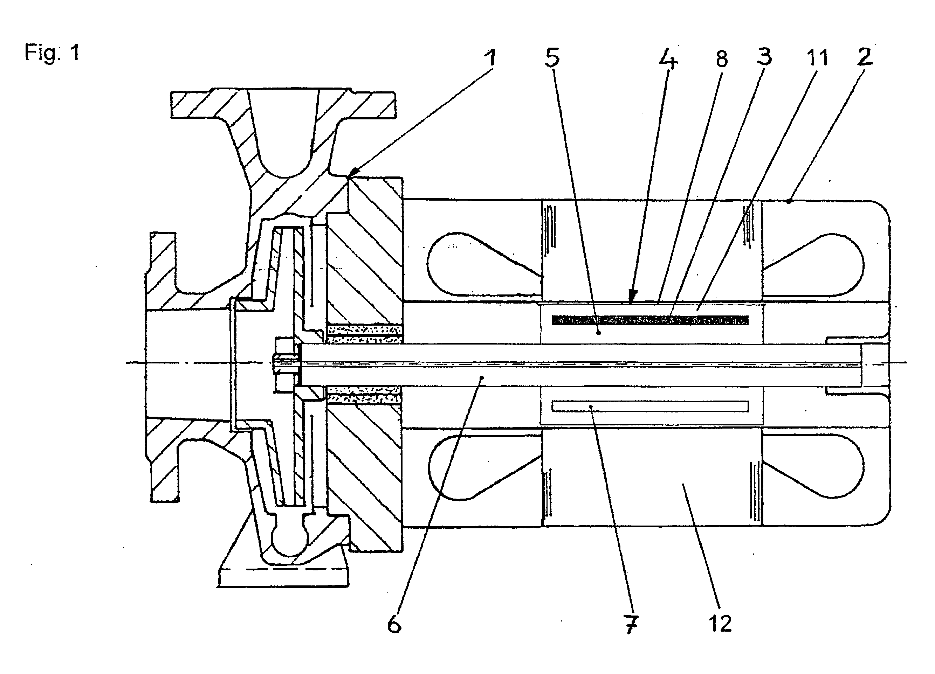

Fig. 1 zeigt einen Querschnitt durch eine direkt angetriebene Kreiselpumpe 1. Die Kreiselpumpe 1 ist zur Förderung von korrosiven Fluiden ausgebildet und hier mit einem Motor 2 in Form eines Spaltrohrmotors ausgestaltet, wobei dessen mit Permanentmagneten 3 versehener Rotor 4 direkt den Fluiden ausgesetzt ist. Der Rotor 4 besteht aus einem einteilig gestalteten Rotoraktivteil 5, das mit einer Welle 6 verbunden ist. Die Welle kann ebenfalls aus einem korrosionsbeständigen Material bestehen. Das Rotoraktivteil 5 ist aus einem korrosionsbeständigen Edelstahl mit einer vergleichsweise geringen magnetischen Permeabilität hergestellt. Ein solcher Rotor 4 wird bei der Fertigung einer solchen Kreiselpumpe beispielsweise auf die Welle 6 geschoben, aufgeschrumpft, geklebt und/oder per Passfeder befestigt. Alternativ kann ein Rotor mit angeformter Welle Verwendung finden. Dazu kann ein Rotor aus einem gegossenen oder geschmiedeten Vorformling hergestellt werden.

Das Rotoraktivteil 5 verfügt über den Umfang verteilt über mehrere Taschen 7, in denen jeweils ein oder mehrere Permanentmagnete 3 angeordnet sind. Die Permanentmagnete 3 sind innerhalb der Taschen 7 vor korrosiven Angriffen durch ein Fluid geschützt. Die Taschen 7 sind mit Abstand von einer Rotoroberfläche 8 in das Rotoraktivteil 5 eingearbeitet. Dadurch sind die Permanentmagnete 3 von einem auf größerem Durchmesser angeordneten, ringförmigen und wirbelstromleitenden Bereich 11 des Rotoraktivteils 5 umgeben. Dieser ringförmige Bereich 11 des Rotoraktivteils 5 bildet somit das Mittel zum Selbstanlauf. Durch eine Wechselwirkung mit einem Stator 12 des Spaltrohrmotors 2 bilden sich innerhalb des Außenbereichs des Rotors 4 Wirbelströme aus, die zusammen mit den Magnetflusslinien des Stators 12 eine Kraftwirkung auf den Rotor 4 ausüben und so einen Selbstanlauf bewirken. Sobald der Rotor 4 seine synchrone Drehzahl erreicht hat, entfalten die Permanentmagnete 3 ihre Wirkung.

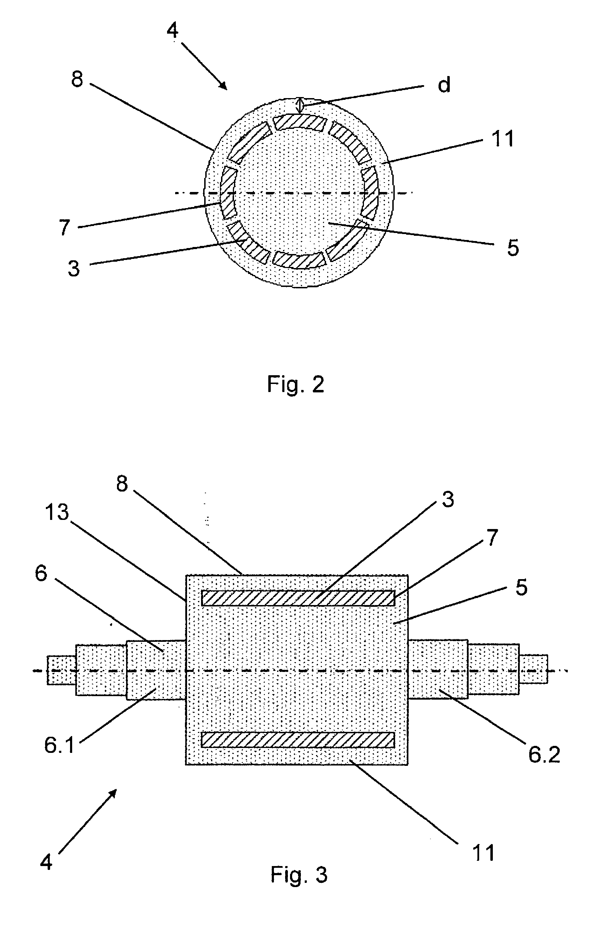

Die Fig. 2 zeigt im Querschnitt einen erfindungsgemäßen Rotor 4 nach einer anderen Ausgestaltung. Der Rotor 4 ist hier einteilig und aus einem einzigen magnetisierbaren korrosionsbeständigen und elektrisch leitfähigen Material bestehend ausgebildet. Der hier einteilige Rotor 4 besteht aus einem Rotoraktivteil 5 und einer direkt angeformten - daher nicht sichtbaren - Welle 6. Der Rotor 4 ist beispielsweise aus einem korrosionsbeständigen Edelstahl hergestellt. Es hat sich als vorteilhaft erwiesen, einen solchen Rotor 4 aus einem gegossenen oder geschmiedeten Vorformling herzustellen und in spanabhebender Bearbeitung die Abmessungen von dem Rotoraktivteil 5 und der angeformten Welle 6 und somit der Rotoraußenkontur herzustellen. In dem Rotoraktivteil 5 sind wiederum mehrere Permanentmagnete 3 integriert. Dazu weist das Rotoraktivteil 5 mehrere sich in axiale Richtung unterhalb und im Abstand zu einer Rotoroberfläche 8 erstreckende Taschen 7 auf, die die Permanentmagnete 3 aufnehmen. Die Permanentmagnete 3 sind von einem auf größerem Durchmesser angeordneten ringförmigen und wirbelstromleitenden Bereich 11 des Rotoraktivteils 5 umgeben. Die Wandstärke d des ringförmigen Bereichs 11 des Rotoraktivteils 5 entspricht dabei einem Wert, der in etwa 15 % des halben Außendurchmessers des Rotors 4 entspricht. Das Material des Rotoraktivteils 5 weist dabei eine vergleichsweise geringe relative magnetische Permeabilität auf. Dadurch, dass die Permanentmagnete 3 mit Abstand zur Rotoroberfläche 5 angeordnet sind, ist am Außenumfang des Rotors ein ausreichend großer Bereich 11 zur Ausbildung von Wirbelströmen vorhanden. Durch den ringförmigen Bereich 11 des Rotoraktivteils 5 ist somit ein Mittel zum Selbstanlauf als integraler Bestandteil des Rotoraktivteils 5 geschaffen.

Fig. 3 zeigt den Rotor 4 gemäß Figur 2 in einem Längsschnitt. Eine Welle 6 ist an den einteiligen Rotor 4 mit Rotoraktivteil 5 angeformt. Alternativ kann das Rotoraktivteil 5 eine Welle umgeben bzw. im Rotoraktivteil können zwei Wellenteile 6.1, 6.2 befestigt sein. Ebenso kann ein Rotor aus mehreren - hier nicht dargestellten - Rotormodulen in Form von Rotoraktivteilen mit integralen Selbstanlaufmitteln ausgebildet sein. Dabei kann eine axiale Länge eines Rotormoduls durch die Abmessungen von darin anzuordnenden Permanentmagneten definiert sein. Solche Rotormodule können formschlüssig und/oder mittels einer Welle oder mittels Wellenteilen aneinander befestigt sein. In der gezeigten Darstellung sind die Permanentmagnete 3 in Taschen 7 angeordnet, deren Aufnahmeöffnungen nach einer Montage an einer oder beiden Rotorstirnseiten angedichtet werden müssen. Dazu sind an einer Rotorstirnseite 13 die Magnettaschen 7 durch separate ― hier nicht dargestellten - Mittel verschlossen. Bei Verwendung von mehreren Rotormodulen wird die Abdichtung der Permanentmagnete an jedem Rotormodul vorgenommen. Die in die Taschen 7 des Rotoraktivteils 5 angeordneten Permanentmagnete 3 können schalenförmig, stabförmig, quaderförmig oder ähnlich ausgebildet sein. Weiterhin ist es möglich, mehrere Permanentmagnete axial hintereinander anzuordnen. Die Permanentmagnete 3 können eine radiale oder eine diametrale Magnetisierung aufweisen.

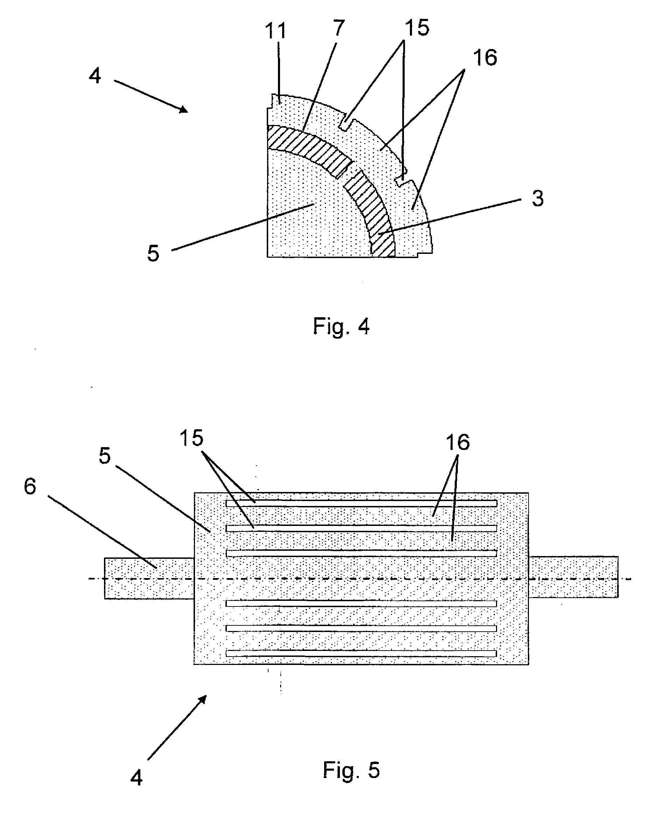

Fig. 4 zeigt im Ausschnitt Rotor 4 nach einer weiteren Ausgestaltung im Querschnitt. Der Rotor 4 ist wiederum mit einer angeformten Welle 6 ausgebildet. In einem wiederum massiv gestalteten Rotoraktivteil 5 sind Permanentmagnete 3 in Taschen 7 angeordnet. Der die Permanentmagnete 3 umgebende Bereich 11 ist wiederum als integrales Selbstanlaufmittel gestaltet. Am Außenumfang des Rotors 4 sind mehrere durch Einstiche oder Schlitze gebildete Sperrräume 15 angeordnet. Diese Sperrräume 15 teilen den Bereich 11 des Rotoraktivteils 5, in dem sich für einen Selbstanlauf eines Elektromotors Wirbelströme ausbilden, in mehrere Abschnitte 16 auf. Solche Sperrräume oder Einstiche 15 am Umfang des Rotors 4 können dabei auch über den Permanentmagneten 3 liegen, sie müssen es aber nicht. Durch Variation der Anzahl solcher Sperrräume 15 ist das Anlaufverhalten eines damit ausgestatteten Rotors 4 optimierbar. Zwischen den Permanentmagneten 3 können auch - hier nicht dargestellte - Flusssperren angeordnet sein. Diese können die Form von Schlitzen, Nuten, Bohrungen oder dgl. aufweisen.

Fig. 5 zeigt nun den Rotor 4 gemäß Fig. 4 in einer Draufsicht. Durch die als Einstiche ausgebildeten Sperrräume 15 wird der die Permanentmagnete 3 umgebende Bereich 11 des Rotoraktivteils 5 in einzelne Abschnitte 16 segmentiert. Dadurch bilden sich die Wirbelströme jeweils in den einzelnen Segmenten 16 aus, was Effizienzverbesserung beim Selbstanlauf mit sich bringt. Die Wirbelströme verlaufen - vergleichbar einem Käfigläufer - beim Anlaufen eines solchen Rotors 4 innerhalb der dadurch entstehenden Segmente 16. Die Segmente 16 sind an den Rotorstirnseiten miteinander verbunden, damit sich die Ströme besser schließen können. Die Sperrräume 15 können darüber hinaus offen oder geschlossen gestaltet sein.

## Patentansprüche

1. Rotor eines Elektromotors, insbesondere eines permanent erregten Synchronmotors, mit einer Rotorwelle, einem massiven Rotoraktivteil, ein oder mehreren Permanentmagneten und mit einem Mittel zum Selbstanlauf des Elektromotors an einem Wechselspannungsnetz,
**dadurch gekennzeichnet, dass**
das Rotoraktivteil (5) und das Mittel zum Selbstanlauf einteilig und aus einem einzigen magnetisierbaren, korrosionsbeständigen und elektrisch leitfähigem Material bestehend ausgebildet ist, das Rotoraktivteil (5) mit sich in axialer Richtung unterhalb der Außenumfangsfläche erstreckende Taschen (7) versehen ist, in die die Permanentmagnete (3) integriert sind, und dass die Permanentmagnete (3) von einem auf größerem Durchmesser angeordneten, ringförmigen und wirbelstromleitenden Bereich (11) des Rotoraktivteils (5) als Selbstanlaufmittel umgeben sind.

2. Rotor nach Anspruch 1, **dadurch gekennzeichnet, dass** die Wandstärke (d) des ringförmigen Bereichs (11) des Rotoraktivteils (5) einem Wert entspricht, der zwischen 10% und 35% des halben Außendurchmessers des Rotors (4) liegt.

3. Rotor nach Anspruch 1 oder 2, **dadurch gekennzeichnet, dass** das Material des Rotoraktivteils (5) eine relative magnetische Permeabilität µᵣ von 5 bis 500 besitzt.

4. Rotor nach einem der Ansprüche 1 bis 3, **dadurch gekennzeichnet, dass** das Rotoraktivteil (5) aus einem korrosionsbeständigen Stahl besteht.

5. Rotor nach einem der Ansprüche 1 bis 4, **dadurch gekennzeichnet, dass** das Rotoraktivteil (5) und die Welle (6) als ein einteiliger Rotor (4) mit angeformter Welle (6) ausgebildet ist.

6. Rotor nach einem der Ansprüche 1 bis 5, **dadurch gekennzeichnet, dass** eine Welle (6) oder zwei Wellenteile (6.1, 6.2) im Rotoraktivteil (5) befestigt ist oder sind.

7. Rotor nach einem der Ansprüche 1 bis 6, **dadurch gekennzeichnet, dass** der Rotor aus mehreren Rotormodulen in Form von Rotoraktivteilen (5) mit integralen Selbstanlaufmitteln besteht.

8. Rotor nach einem der Ansprüche 1 bis 7, **dadurch gekennzeichnet, dass** die Permanentmagnete (3) für eine hohe Packungsdichte schalenförmig, stabförmig, quaderförmig oder ähnlich ausgebildet sind.

9. Rotor nach Anspruch 7 oder 8, **dadurch gekennzeichnet, dass** in einer Tasche (7) zwei oder mehrere Permanentmagnete (3) axial hintereinander angeordnet sind.

10. Rotor nach einem der Ansprüche 1 bis 9, **dadurch gekennzeichnet, dass** zwischen den Permanentmagneten (3) ein oder mehrere Flusssperren angeordnet sind.

11. Rotor nach einem der Ansprüche 1 bis 10, **dadurch gekennzeichnet, dass** im Selbstanlaufmittel mehrere wirbelstrombeeinflussende Sperrräume (15) angeordnet sind.

12. Rotor nach einem der Ansprüche 1 bis 11, **dadurch gekennzeichnet, dass** die Flusssperren und/oder die Sperrräume (15) als offene oder geschlossene Luftsperren und/oder Sperrräume (15) in Form von Einstichen, Schlitzen, Nuten, Bohrungen oder dergleichen ausgebildet sind.

13. Rotor nach einem der Ansprüche 1 bis 12, **dadurch gekennzeichnet, dass** der Rotor (4) Bestandteil eines Spaltrohrmotors (2) ist.

14. Elektromotor **gekennzeichnet durch** einen Rotor (4) nach einem der Ansprüche 1 bis 13.

15. Kreiselpumpe mit einem Elektromotor **gekennzeichnet durch** einen Rotor (4) nach einem der Ansprüche 1 bis 13.

16. Verfahren zum Betrieb eines Elektromotors nach Anspruch 14 und/oder einer Kreiselpumpe nach Anspruch 15, **dadurch gekennzeichnet, dass** die Speisung des Elektromotors durch ein starres Spannungsnetz erfolgt.

17. Verfahren zum Betrieb eines Elektromotors nach Anspruch 14 und/oder einer Kreiselpumpe nach Anspruch 15, **dadurch gekennzeichnet, dass** die Speisung des Elektromotors durch einen Frequenzumrichter, vorzugsweise ohne Erfassung der Rotorlage, erfolgt.

## Claims

1. Rotor of an electric motor, in particular a permanent-magnet synchronous motor, having a rotor shaft, a solid active part of the rotor, one or more permanent magnets and having a means for self-starting of the electric motor from an AC voltage supply system, **characterized in that** the active part (5) of the rotor and the self-starting means are integral and are composed of a single magnetizable, corrosion-resistant and electrically conductive material, the active part (5) of the rotor is provided with pockets (7) which extend in the axial direction beneath the outer circumferential surface and in which the permanent magnets (3) are integrated, and **in that** the permanent magnets (3) are surrounded by a region (11) of the active part (5) of the rotor, which is arranged on a relatively large diameter, is annular and conducts eddy currents, as the self-starting means.

2. Rotor according to Claim 1, **characterized in that** the wall thickness (d) of the annular region (11) of the active part (5) of the rotor corresponds to a value of between 10% and 35% of half of the outside diameter of the rotor (4).

3. Rotor according to Claim 1 or 2, **characterized in that** the material of the active part (5) of the rotor has a relative magnetic permeability µᵣ of from 5 to 500.

4. Rotor according to one of Claims 1 to 3, **characterized in that** the active part (5) of the rotor is composed of a corrosion-resistant steel.

5. Rotor according to one of Claims 1 to 4, **characterized in that** the active part (5) of the rotor and the shaft (6) are in the form of an integral rotor (4) with an integrally formed shaft (6).

6. Rotor according to one of Claims 1 to 5, **characterized in that** one shaft (6) or two shaft parts (6.1, 6.2) is or are fastened in the active part (5) of the rotor.

7. Rotor according to one of Claims 1 to 6, **characterized in that** the rotor comprises a plurality of rotor modules in the form of active parts (5) of the rotor with integral self-starting means.

8. Rotor according to one of Claims 1 to 7, **characterized in that** the permanent magnets (3) are in the form of shells, rods, cuboids or the like, in order to achieve a high packing density.

9. Rotor according to Claim 7 or 8, **characterized in that** two or more permanent magnets (3) are arranged axially one behind the other in a pocket (7).

10. Rotor according to one of Claims 1 to 9, **characterized in that** one or more flux barriers are arranged between the permanent magnets (3).

11. Rotor according to one of Claims 1 to 10, **characterized in that** a plurality of barrier spaces (15) which influence eddy currents are arranged in the self-starting means.

12. Rotor according to one of Claims 1 to 11, **characterized in that** the flux barriers and/or the barrier spaces (15) are designed as open or closed air barriers and/or barrier spaces (15) in the form of incisions, slots, grooves, bores or the like.

13. Rotor according to one of Claims 1 to 12, **characterized in that** the rotor (4) is a constituent part of a canned motor (2).

14. Electric motor, **characterized by** a rotor (4) according to one of Claims 1 to 13.

15. Centrifugal pump having an electric motor **characterized by** a rotor (4) according to one of Claims 1 to 13.

16. Method for operating an electric motor according to Claim 14 and/or a centrifugal pump according to Claim 15, **characterized in that** the electric motor is fed by a fixed voltage supply system.

17. Method for operating an electric motor according to Claim 14 and/or a centrifugal pump according to Claim 15, **characterized in that** the electric motor is fed by a frequency converter, preferably without detecting the rotor position.

## Revendications

1. Rotor d'un moteur électrique, en particulier d'un moteur synchrone à excitation permanente, comprenant un arbre de rotor, une partie active de rotor massive, un ou plusieurs aimants permanents et un moyen pour le démarrage automatique du moteur électrique sur un réseau de tension alternative,
**caractérisé en ce que**
la partie active de rotor (5) et le moyen de démarrage automatique sont réalisés d'une seule pièce et en un matériau unique aimantable, résistant à la corrosion et électriquement conducteur, la partie active de rotor (5) est pourvue de poches (7) s'étendant dans la direction axiale sous la surface périphérique extérieure, dans lesquelles poches sont intégrés les aimants permanents (3), et **en ce que** les aimants permanents (3) sont entourés par une région (11) de la partie active de rotor (5) disposée sur un plus grand diamètre, de forme annulaire et conduisant les courants de Foucault, en tant que moyen de démarrage automatique.

2. Rotor selon la revendication 1, **caractérisé en ce que** l'épaisseur de paroi (d) de la région de forme annulaire (11) de la partie active de rotor (5) correspond à une valeur qui est comprise entre 10 % et 35 % du rayon extérieur du rotor (4).

3. Rotor selon la revendication 1 ou 2, **caractérisé en ce que** le matériau de la partie active de rotor (5) possède une perméabilité magnétique relative µᵣ de 5 à 500.

4. Rotor selon l'une quelconque des revendications 1 à 3, **caractérisé en ce que** la partie active de rotor (5) se compose d'un acier résistant à la corrosion.

5. Rotor selon l'une quelconque des revendications 1 à 4, **caractérisé en ce que** la partie active de rotor (5) et l'arbre (6) sont réalisés sous forme d'un rotor d'une seule pièce (4) avec un arbre (6) façonné sur lui.

6. Rotor selon l'une quelconque des revendications 1 à 5, **caractérisé en ce qu'**un arbre (6) ou deux parties d'arbre (6.1, 6.2) est ou sont fixé(es) dans la partie active de rotor (5).

7. Rotor selon l'une quelconque des revendications 1 à 6, **caractérisé en ce que** le rotor se compose de plusieurs modules de rotor sous forme de parties actives de rotor (5) avec des moyens de démarrage automatique intégrés.

8. Rotor selon l'une quelconque des revendications 1 à 7, **caractérisé en ce que** les aimants permanents (3) sont réalisés sous forme de coque, de barre, de parallélépipède ou similaire pour une grande densité de garniture.

9. Rotor selon la revendication 7 ou 8, **caractérisé en ce que** dans une poche (7) sont disposés, axialement les uns derrière les autres, deux ou plus de deux aimants permanents (3).

10. Rotor selon l'une quelconque des revendications 1 à 9, **caractérisé en ce qu'**un ou plusieurs blocages de flux sont disposés entre les aimants permanents (3).

11. Rotor selon l'une quelconque des revendications 1 à 10, **caractérisé en ce que** plusieurs espaces de blocage (15) influençant les courants de Foucault sont disposés dans le moyen de démarrage automatique.

12. Rotor selon l'une quelconque des revendications 1 à 11, **caractérisé en ce que** les blocages de flux et/ou les espaces de blocage (15) sont réalisés sous forme de barrières d'air et/ou d'espaces de blocage (15) ouverts ou fermés sous forme d'encoches, de fentes, de rainures, de perçages ou similaires.

13. Rotor selon l'une quelconque des revendications 1 à 12, **caractérisé en ce que** le rotor (4) fait partie d'un moteur à gaine (2).

14. Moteur électrique, **caractérisé par** un rotor (4) selon l'une quelconque des revendications 1 à 13.

15. Pompe centrifuge comprenant un moteur électrique, **caractérisée par** un rotor (4) selon l'une quelconque des revendications 1 à 13.

16. Procédé pour faire fonctionner un moteur électrique selon la revendication 14 et/ou une pompe centrifuge selon la revendication 15, **caractérisé en ce que** l'alimentation du moteur électrique est réalisée par un réseau de tension fixe.

17. Procédé pour faire fonctionner un moteur électrique selon la revendication 14 et/ou une pompe centrifuge selon la revendication 15, **caractérisé en ce que** l'alimentation du moteur électrique est réalisée par un redresseur de fréquence, de préférence sans détection de la position du rotor.
